# EUROPÄISCHE PATENTANMELDUNG

(11) **EP 0 733 537 A1**
(43) Veröffentlichungstag der Anmeldung: **25.09.1996**
(21) Anmeldenummer: 95104191.2
(22) Anmeldetag: 22.03.1995
(51) Int. Cl.: B62D 25/02, B62D 29/00

(54) **Äusseres Verkleidungsteil für eine Kraftfahrzeug-Trägerstruktur**

(71) Anmelder: Dr.Ing.h.c. F. Porsche Aktiengesellschaft, D-70435 Stuttgart (DE); REGIE NATIONALE DES USINES RENAULT S.A., F-92109 Boulogne Billancourt Cédex (FR)
(72) Erfinder: Hoffmann, Mario, D-71287 Weissach (DE); Vlahovic, Josip, D-74321 Bietigheim-Bissingen (DE)

(57) **Zusammenfassung**

Ein äußeres Verkleidungsteil aus Kunststoff (1) für eine Kraftfahrzeug-Trägerstruktur in Leichmetall-Space-Frame-Bauweise umrahmt eine Tür- oder Fensteröffnung (2,3) und weist einen umlaufenden Flansch (13,14) zur Aufnahme eines Dichtprofils auf.

## Beschreibung

Die Erfindung betrifft ein äußeres Verkleidungsteil für eine Kraftfahrzeug-Trägerstruktur, insbesondere in Space-Frame-Bauweise, gemäß dem Oberbegriff des Patentanspruchs 1.

Aus dem Bericht über Aluminium-Spaceframe-Technologie der Zeitschrift Aluminium, 70. Jahrgang 1994, 3/4, Seiten 144 - 155 ist eine aus Aluminium-Hohlprofilen zusammengesetzte Trägerstruktur bekannt, bei der äußere Verkleidungsteile aus Kunststoff die Außenhaut der Fahrzeugkarosserie bilden.

Wagenkasten für Kraftfahrzeuge in Space-Frame-Bauweise bestehen aus Strangpreßprofilen und Knotenelementen, die miteinander verbunden werden. Insbesondere bei Kraftfahrzeugen mit zwei hintereinanderliegend angeordneten seitlichen Türen hat sich in der Praxis gezeigt, daß die durch die Trägerstrukturen begrenzten Öffnungen zur Aufnahme der Türen aufgrund der Toleranzen der zu verbindenden Bauteile der Trägerstruktur und den beim Schweißen auftretenden Verzug in ihrer Größe von Fahrzeug zu Fahrzeug stark differieren, so daß Probleme hinsichtlich Dichtigkeit, Fugenverlauf und Paßgenauigkeit der Türen auftreten.

Aufgabe der Erfindung ist es, ein äußeres Verkleidungsteil aus Kunststoff für eine Kraftfahrzeug-Trägerstruktur der eingangs genannten Art derart herzustellen, daß die genannten Nachteile vermieden werden.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß das vorzugsweise aus Kunststoff gefertigte äußere Verkleidungsteil großflächig ausgebildet ist und wenigstens eine Tür- oder Fensteröffnung umrahmt. So können Maßabweichungen der Trägerstruktur durch ein maßgenaues, großflächiges äußeres Verkleidungsteil aus Kunststoff kompensiert werden. Am äußeren Verkleidungsteil integriert angebrachte Flansche sind für die Befestigung von Dichtprofilen vorgesehen. Die Maßgenauigkeit des äußeren Verkleidungsteils stellt nach Einbau der Türen einen einwandfreien Fugenverlauf, Paßgenauigkeit und Dichtheit sicher. Das äußere Verkleidungsteil reduziert eine Vielzahl von Arbeitsschritten bei der Verkleidung des Wagenkastens und stellt somit eine kostengünstige und wenig arbeitsintensive Maßnahme dar. Das äußere Verkleidungsteil kann zwei hintereinanderliegende Fahrzeugtüröffnungen umrahmen, wobei der Dachlängsholm, der Türschweller sowie die aufrechten Türsäulen mit verkleidet sind. Bei zweitürigen Kraftfahrzeugen kann das äußere Verkleidungsteil einteilig die Fahrzeugtüröffnung und das hintere Seitenfenster umrahmen. Großflächige Außenteile mit Öffnungen und integriertem Flansch für Dichtprofile sind auch für ein Fahrzeugdach mit Schiebedachöffnung oder einer Kofferraum- oder Heckklappenöffnung von Vorteil.

Ausführungsbeispiele der Erfindung sind in den Zeichnungen dargestellt und werden im folgenden näher beschrieben.
Es zeigen
- Fig. 1: ein äußeres Verkleidungsteil für ein viertüriges Kraftfahrzeug,
- Fig. 2: eine Einzelheit X der Fig. 1 in größerem Maßstab,
- Fig. 3: einen horizontalen Schnitt durch die B-Säule entlang der Linie III-III der Fig. 1,
- Fig. 4: einen horizontalen Schnitt durch die B-Säule entlang der Linie IV-IV der Fig. 1.

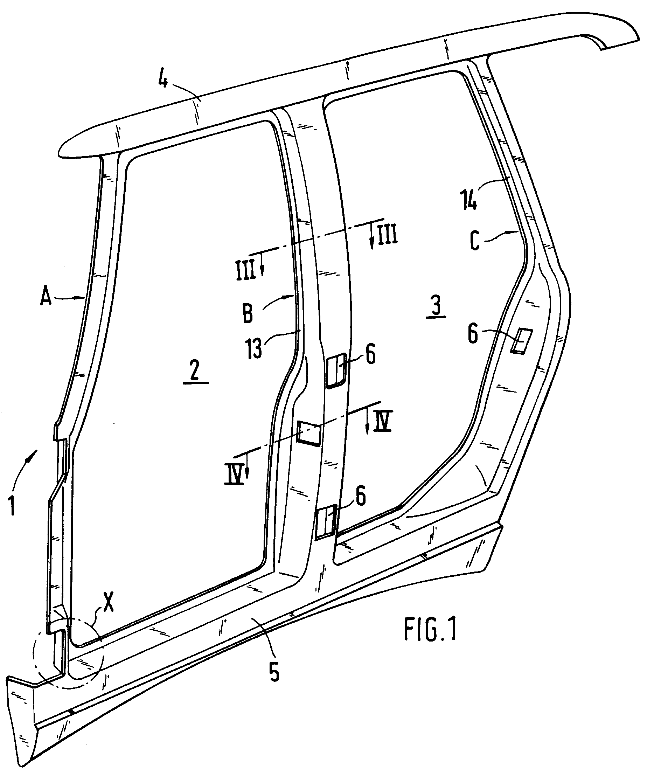

In Fig. 1 ist ein vorzugsweise aus Kunststoff oder dgl. gefertigtes äußeres Verkleidungsteil 1 einer Türseite eines viertürigen Kraftfahrzeuges gezeigt. Das äußere Verkleidungsteil 1 umrahmt die beiden hintereinanderliegend angeordneten Türöffnungen 2, 3, und deckt den Dachlängsholm 4, den Türschweller 5 sowie Teilbereiche der aufrechten Türsäulen (A-Säule, B-Säule, C-Säule) zu mindest abschnittsweise ab. Das äußere Verkleidungsteil 1 ist mit Durchtrittsöffnungen 6 für Türscharniere und Schloßbolzen versehen. Die Befestigung am Wagenkasten erfolgt mit bekannten Mitteln, wie z.B. Kleben, Nieten, Klemmen oder einer Kombination dieser Befestigungsarten.

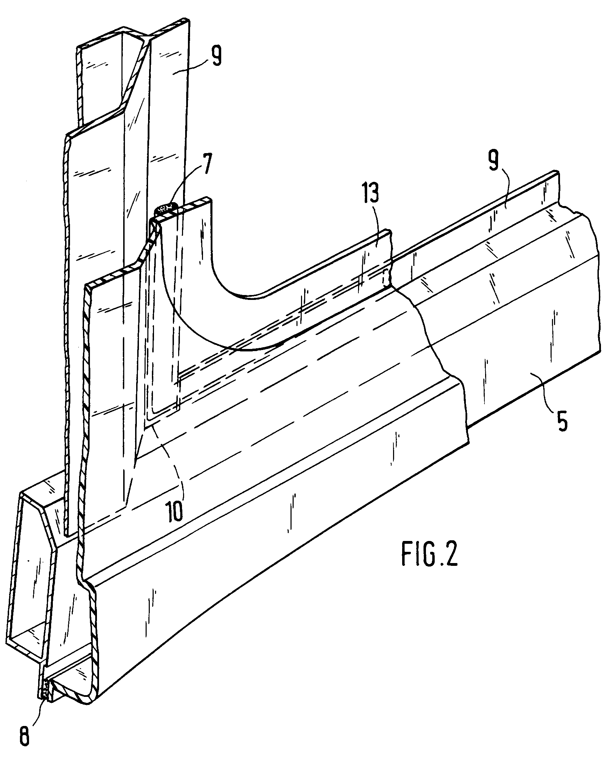

Die Fig. 2 veranschaulicht die Einzelheit X der Fig. 1 in größerem Maßstab. Das äußere Verkleidungsteil 1 ist mit einer Kleberraupe 7 am Rand der Türöffnung 2 und einer weiteren Kleberraupe 8 am Türschweller 5 befestigt. Das äußere Verkleidungsteil 1 ist im Bereich der Türöffnung mit einem Flansch 13 versehen, der zur Halterung eines Dichtprofils 15 verwendbar ist. Das äußere Verkleidungsteil 1 ist so ausgebildet, daß die Eckbereiche 10 von angrenzenden, rechtwinkelig zusammengesetzten Profilteilen 9 der Trägerstruktur überdeckt sind. Der Flansch 13 ist im Eckbereich 10 radienförmig ausgebildet, um die Halterung des Dichtprofils 15 in diesem Problembereich zu erleichtern und um gegebenenfalls ein nahtloses, rundum laufendes Dichtprofil einsetzen zu können.

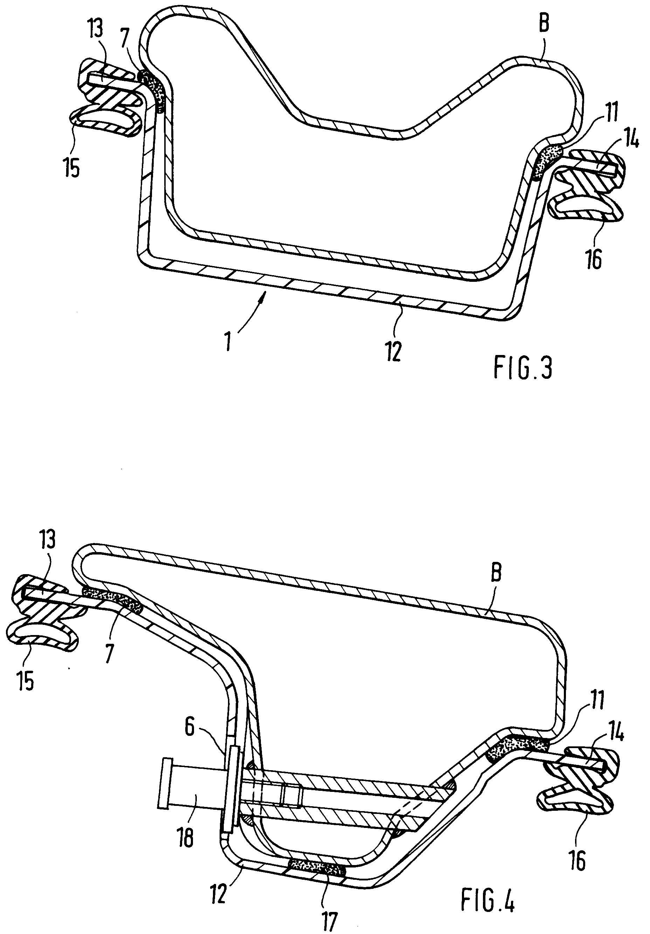

Fig. 3 zeigt einen horizontalen Schnitt durch die B-Säule entlang der Linie III-III der Fig. 1. Die B-Säulenverkleidung 12 des äußeren Verkleidungsteils 1 ist mittels Kleberraupen 7, 11 an der Säule B befestigt. Die am äußeren Verkleidungsteil 1 integrierten Flansche 13, 14 tragen die Dichtprofile 15, 16 der vorderen bzw. hinteren Türöffnung 2, 3.

Fig. 4 zeigt einen horizontalen Schnitt durch die B-Säule entlang der Linie IV-IV der Fig. 1. Dieser Schnitt in Höhe des Schloßbolzens 18 zeigt eine Durchtrittsöffnung 6 in der B-Säulenverkleidung 12. Die Befestigung der B-Säulenverkleidung 12 erfolgt mittels Kleberraupen 7, 11, 17 an der B-Säule. Dichtprofile 15, 16 sind an den am äußeren Verkleidungsteil 1 integriert angebrachten Flanschen 13, 14 befestigt.

### Bezugszeichen:

- 1: äußeres Verkleidungsteil
- 2: Türöffnung
- 3: Türöffnung
- 4: Dachlängsholm
- 5: Türschweller
- 6: Durchtrittsöffnungen
- 7: Kleberraupe
- 8: Kleberraupe
- 9: Profilteile
- 10: Eckbereiche
- 11: Kleberraupe
- 12: B-Säulenverkleidung
- 13: Flansch
- 14: Flansch
- 15: Dichtprofil
- 16: Dichtprofil
- 17: Kleberraupe
- 18: Schloßbolzen

## Patentansprüche

1. Äußeres Verkleidungsteil (1) für eine Kraftfahrzeug-Trägerstruktur, insbesondere in Space-Frame-Bauweise, **dadurch gekennzeichnet, daß** das vorzugsweise aus Kunststoff gefertigte äußere Verkleidungsteil (1) großflächig derart ausgebildet ist, daß es wenigstens eine Tür- oder Fensteröffnung (2, 3) der Trägerstruktur umrahmt und daß am äußeren Verkleidungsteil (1) benachbart der Tür- oder Fensteröffnung (2, 3) zumindest ein umlaufender Flansch (13, 14) zur Aufnahme eines Dichtprofils (15, 16) vorgesehen ist.

2. Äußeres Verkleidungsteil nach Anspruch 1, **dadurch gekennzeichnet,** daß zwei hintereinanderliegende Fahrzeugtüröffnungen (2, 3) einteilig derart umrahmt werden, daß Dachlängsholm (4), Türschweller (5) sowie aufrechte Türsäulen im äußeren Verkleidungsteil miteingeschlossen sind.

3. Äußeres Verkleidungsteil nach Anspruch 1, **dadurch gekennzeichnet,** daß bei einem zweitürigen Kraftfahrzeug die Fahrzeugtüröffnung und das dahinterliegende Seitenfenster einteilig umrahmt wird.

4. Äußeres Verkleidungsteil nach Anspruch 1, **dadurch gekennzeichnet,** daß die Heckklappenöffnung umrahmt wird.

5. Äußeres Verkleidungsteil nach Anspruch 1, **dadurch gekennzeichnet,** daß das äußere Verkleidungsteil (1) das Fahrzeugdach bildet, das eine Schiebedachöffnung mit umlaufendem Flansch beinhaltet.

6. Äußeres Verkleidungsteil nach den Ansprüchen 1 bis 5, **dadurch gekennzeichnet,** daß der Flanschverlauf in den Eckbereichen 10 von angrenzenden, rechtwinkelig zusammentreffenden Profilteilen (9) radienförmig ausgebildet ist.
